# EUROPÄISCHE PATENTSCHRIFT

(11) **EP 3 769 055 B1**
(45) Veröffentlichungstag und Bekanntmachung des Hinweises auf die Patenterteilung: **15.02.2023**
(21) Anmeldenummer: 19709709.0
(22) Anmeldetag: 07.03.2019
(51) Int. Cl.: G01G 21/26

(54) **KALIBRIERGEWICHT UND VERWENDUNG EINES BAUTEILS ALS KALIBRIERADAPTOR**
CALIBRATION WEIGHT AND USE OF A CALIBRATION ADAPTER
POIDS DE CALIBRAGE ET UTILISATION D'UN ADAPTATEUR DE CALIBRAGE

(30) Priorität: 21.03.2018 DE 102018106617
(43) Veröffentlichungstag der Anmeldung: 27.01.2021
(73) Patentinhaber: Sartorius Lab Instruments GmbH & Co. KG, 37079 Göttingen (DE)
(72) Erfinder: STÄNDER, Malte, 37308 Heiligenstadt (DE)
(74) Vertreter: Novagraaf International SA
(86) Internationale Anmeldenummer: PCT/EP2019/055698
(87) Internationale Veröffentlichungsnummer: WO 2019/179783

(56) Entgegenhaltungen:
- DE-A1- 4 006 375
- DE-T2- 68 914 521
- DE-U1- 9 107 557
- US-A1- 2013 025 344

## Beschreibung

### Gebiet der Erfindung

Die Erfindung betrifft ein Kalibriergewicht, umfassend ein Gewichtsstück und ein Gehäuse, wobei das Gewichtsstück in einem bodenseitig offenen Gehäuse unverlierbar und mit Axialspiel angeordnet ist, wobei das Gewichtsstück bei vertikaler Ausrichtung des Kalibriergewichts an Aufhängungsstrukturen innerhalb des Gehäuses aufgehängt ist.

Die Erfindung betrifft weiter die Verwendung eines mit einer Waage verbundenen oder verbindbaren Bauteils als ein Kalibrieradapter zur einfachen Handhabung eines Kalibriergewichts der vorgenannten Art.

### Stand der Technik

Der Begriff des Kalibrierens ist im Kontext der vorliegenden Erfindung weit zu verstehen und umfasst alle Prüf-, Eich- und Justiervorgänge, im Rahmen derer eine Waage mit einem Gewicht bekannter Spezifikation, nämlich einem Kalibriergewicht, auf ihrem Lastaufnehmer beschwert wird. Derartige Kalibriergewichte bestehen in der Regel aus einem Gewichtsstück einer durch internationale Normen standardisierten Form, bspw. aus einem Standard-Knopfgewicht gem. OIML R 111-1:2004/DIN 8127:2007-11. Derartige Gewichtsstücke sind Präzisionselemente, die einer speziellen Handhabung, Lagerung und regelmäßigen Prüfung bedürfen. Berührungen mit bloßer Hand oder mit kratzenden Werkzeugen müssen ebenso vermieden werden, wie Verschmutzung durch Staubanlagerung oder gar eine Beschädigung durch Sturz. Kalibriervorgänge unter Zuhilfenahme derartiger Kalibriergewichte können also nur von gut geschultem und erfahrenem Personal durchgeführt werden. Die regelmäßige Einsendung solcher Kalibriergewichte zum Zwecke ihrer Überprüfung bei zertifizierten Prüf- oder Eichstationen ist ebenfalls mit erheblichem Aufwand und Schadensrisiko verbunden.

Aus der DE 689 14 521 T2 ist eine elektronische Waage mit einer plattenförmigen Waagschale bekannt, die am Umfang eine nach unten ragende Schürze hat. Zwischen den Kanten der bodenseitig offenen Waagschale ist ein plattenförmiges Kalibriergewicht gelagert, das durch eine Abdeckung, die das Kalibriergewicht mit Übermaß, insbesondere in vertikaler Richtung, umgibt, rundherum vor Staub geschützt ist. Die Abdeckung weist lediglich an ihrer Unterseite Öffnungen auf, zum einen für den Lastaufnehmer der Waage, zum anderen für vertikal verfahrbare Hubstangen, mittels derer das Kalibriergewicht angehoben und somit vom Lastaufnehmer ferngehalten werden kann.

Bei einem anderen Ausführungsbeispiel der oben genannten Druckschrift sind unten an den einander gegenüberliegenden Längskanten der mit einer am Umfang nach unten ragenden Schürze versehenen, plattenförmigen Waagschale Querbalken fixiert, die den sich zwischen den Kanten erstreckenden Freiraum unterhalb der Waagschale überspannen. In dem Raum zwischen der Waagschale und den Querbalken ist ein plattenförmiges Kalibriergewicht gelagert. Für eine Kalibrierung wird das Kalibriergewicht auf den Lastaufnehmer der Waage aufgelegt.

Nachteilig ist, dass bei beiden Ausführungsformen die Auflagefläche, mit der das Kalibriergewicht im Fall eines Kalibriervorgangs auf den Lastaufnehmer der Waage aufgelegt werden kann, eingeschränkt wird: bei der ersten Ausführungsform durch die Abdeckung, durch deren Öffnungen der Lastaufnehmer für den Kalibriervorgang hindurchgreifen muss, bei der zweiten Ausführungsform durch die Querbalken. Bei schweren, plattenförmigen Gewichtsstücken mag dies zwar unproblematisch sein. Aber bei Gewichtsstücken geringer Masse, die eher hoch als flach bauen und nur eine kleine Auflagefläche aufweisen, würde sich die Angriffsfläche für den Lastaufnehmer durch die Abdeckung bzw. die Querbalken derart verringern, dass eine reproduzierbare, stabile Auflage nicht mehr gewährleistet wäre.

Aus der DE 91 07 557 U1 ist eine elektronische Waage mit einem Kalibriergewicht bekannt, das von einem vollständig geschlossenen Gehäuse umgeben ist. Das quaderförmige Gehäuse verfügt über einen Zwischenboden, auf dem zwei keilförmige Hubelemente angeordnet sind, die über eine Spindel miteinander verbunden und aufeinander zu bzw. voneinander weg bewegbar sind. Auf den zur Horizontalen geneigten Keilflächen der Hubelemente liegt ein im Wesentlichen U-förmiger Bügel auf, dessen beide Schenkel den Zwischenboden durchdringen. Unterhalb des Zwischenbodens weisen die beiden Schenkel je eine schlitzförmige Ausnehmung auf, in welche je ein das Ende eines Kalibriergewichts überragender Zapfen eingreift. Zwischen die beiden Schenkel des Bügels und die Enden des Kalibriergewichts ragt je ein am Lastaufnehmer befestigter Ausleger. Zur Kalibrierung der Waage werden durch Drehen der Spindel die beiden Hubelemente aufeinander zu geschoben, wodurch sich der Bügel nach unten senkt und das am Bügel hängende Kalibriergewicht, welches in der Ruhestellung am Zwischenboden anliegt, ebenfalls abgesenkt wird. Beim Absenken des Kalibriergewichts werden die Zapfen auf die Ausleger aufgelegt und lösen sich etwa gleichzeitig von der Auflage in der schlitzförmigen Ausnehmung an den Schenkeln des Bügels. Nach durchgeführter Kalibrierung kann das Kalibriergewicht durch Drehen der Spindel in entgegengesetzter Drehrichtung wieder vom Ausleger abgehoben und in die Ruheposition zwischen der Auflage in der Ausnehmung am Bügel und dem Zwischenboden eingeklemmt werden.

Aus der DE 10 2012 112 508 B3 ist ein Gewichtskasten mit Prüfgewichten in Knopfform inklusive einem dazugehörigen Handhabungswerkzeug für die Prüfgewichte bekannt. Während leichtere Prüfgewichte bis etwa 200 Gramm bequem mittels einer Pinzette aufgenommen werden können, kommen bei schwereren Prüfgewichten Handhabungswerkzeuge mit gabelförmigen Enden zum Einsatz. Durch verschiedene Adapter kann die Nennweite, also der Abstand der beiden Gabelzinken zueinander, so angepasst werden, dass unterschiedliche Prüfgewichte mit unterschiedlichen Hals-Durchmessern in ihrem Halsbereich aufgenommen werden können.

Aus der US 2013/0025344 A1 ist ein Kalibriergewicht bekannt, das an seiner Außenfläche mit einem maschinenlesbaren Identifikationscode versehen ist, was es individuell erkennbar macht.

Auch aus der DE 40 06 375 A1 sind mit einer Codierung versehene Eichgewichte bekannt, wobei die Codierung die Eichgewichte mit ihrem Gewichtswert kennzeichnet.

Aus der US 2002/0166706 sind hexagonal geformte Metallgewichte bekannt, die von einem Kunststoff-Mantel umhüllt sind. Der Kunststoff-Mantel soll die Gewichte zum einen vor Beschädigungen durch Fallenlassen oder den Kontakt mit Feuchtigkeit bzw. korrosiven Stoffen schützen. Zum anderen reduziert der Mantel, der frei von spitzen oder scharfen Kanten ist, die Verletzungsgefahr beim Umgang mit den Gewichten und reduziert durch seinen im Vergleich zum nackten Gewicht größeren Durchmesser die Erstickungsgefahr bei Verschlucken. Darüber hinaus können die Gewichte an ihren Enden ineinandergesteckt und so gestapelt werden.

### Aufgabenstellung

Es ist die Aufgabe der vorliegenden Erfindung, ein Kalibriergewicht zur Verfügung zu stellen, welches eine einfachere und sicherere Handhabung bei Kalibrier- und Transportvorgängen ermöglicht und bei dem die Auflagefläche auf dem Lastaufnehmer der Waage maximiert ist.

### Darlegung der Erfindung

Diese Aufgabe wird in Verbindung mit den Merkmalen des Oberbegriffs von Anspruch 1 dadurch gelöst, dass das Gewichtsstück ausgebildet ist als ein rotationssymmetrisches Knopfgewicht mit einem Kopf eines ersten Durchmessers, einem zylindrischen Körper eines zweiten Durchmessers und einem zwischen dem Kopf und dem Körper angeordneten Hals eines dritten Durchmessers, der kleiner als der erste Durchmesser ist, und dass der Innenraum des Gehäuses in wenigstens zwei Axialabschnitte unterteilt ist, nämlich
- einen den Kopf des Gewichtsstücks mit radialem und axialem Übermaß umgebenden Kopfbereich und
- einen den Körper des Gewichtsstücks mit radialem Übermaß umgebenden Körperbereich,
die durch einen nach radial innen kragenden Halssteg axial voneinander abgegrenzt sind, welcher den Übergang zwischen dem Kopfbereich und dem Körperbereich auf einen Durchmesser kleiner als der erste und größer als der dritte Durchmesser verengt, wobei der Halssteg den Aufhängungsstrukturen entspricht und wobei das Gehäuse eine Axialführungsstruktur aufweist, die sich von seinem bodenseitigen Rand her in axialer Richtung erstreckt.

Bevorzugte Ausführungsformen der Erfindung sind Gegenstand der abhängigen Patentansprüche.

Die Grundidee der Erfindung ist es, als Kalibriergewicht kein nacktes Gewichtsstück, sondern ein Kombinationselement, bestehend aus dem Gewichtsstück und einem Gehäuse zu verwenden. Das Gewichtsstück ist dabei unverlierbar mit dem Gehäuse verbunden, d. h. nicht aus dem Gehäuse entnehmbar. Innerhalb des Gehäuses ist es jedoch nicht fixiert angeordnet, sondern mit Axialspiel aufgehängt. Bei lagerichtiger Ausrichtung, d. h. Gehäuseboden unten, hängt das Gewichtsstück an entsprechenden Aufhängungsstrukturen innerhalb des Gehäuses. Das heißt, dass das Gewichtsstück in seinem oberen Bereich an entsprechenden Aufhängungsstrukturen, die sich innerhalb des Gehäuses befinden, beweglich befestigt ist. Der Boden des Gehäuses ist jedoch offen, sodass die Unterseite des hängenden Gewichtsstücks von unten zugänglich ist. Eine entgegen der Schwerkraft gerichtete Kraft auf die Unterseite des Gewichtsstücks führt auf Grund des erfindungsgemäßen Axialspiels seiner Aufhängung zu einem geringfügigen Anheben des Gewichtsstücks innerhalb des Gehäuses. Hierdurch verliert das Gewichtsstück den mechanischen Kontakt zu seinen Aufhängungsstrukturen im Gehäuse, sodass es mit seiner vollen Gewichtskraft der vorgenannten, nach oben gerichteten Kraft entgegenwirkt.

Im Rahmen eines Kalibriervorgangs wird das erfindungsgemäße Kalibriergewicht zunächst schwebend über dem Lastaufnehmer der zu kalibrierenden Waage gehalten. Alsdann wird das Kalibriergewicht langsam abgesenkt, wobei der Lastaufnehmer durch den offenen Boden des Gehäuses ragt und in Kontakt zur Unterseite des Gewichtsstücks gelangt. Beim weiteren Absenken des Kalibriergewichts wird das Gewichtsstück von dem Lastaufnehmer abgestützt, während das Gehäuse weiter abgesenkt wird, bis es seinerseits von einer mit der Waagenbasis verbundenen Trägerstruktur gestoppt wird. Während dieses letzten Absenkweges wird also das Gewichtsstück relativ zum Gehäuse angehoben, sodass es, wie oben beschrieben, den mechanischen Kontakt zu seinen Aufhängungsstrukturen verliert und ohne jeglichen Massennebenschluss zum Gehäuse mit seiner vollen Gewichtskraft auf den Lastaufnehmer der Waage wirkt. Das Gehäuse selbst steht dabei auf der basisfesten Trägerstruktur auf und wirkt zugleich als Windschutz. In diesem Zustand kann eine Präzisionswägung des Gewichtsstücks vorgenommen werden, wie sie für den jeweiligen Kalibriervorgang vorgesehen ist.

Das Aufsetzen des Gewichtsstücks auf den Lastaufnehmer erfolgt also ohne jegliche Berührung des Gewichtsstücks durch (behandschuhte) Hände oder Werkzeuge. Zudem wird das Gewichtsstück nicht aus dem Gehäuse entnommen, sodass eine Verschmutzung ausgeschlossen ist. Selbst bei einem Sturz des erfindungsgemäßen Kalibriergewichts kommt das Gewichtsstück selbst nicht mit äußeren harten oder scharfkantigen Konturen in Kontakt, da es stets von seinem Gehäuse ummantelt bleibt. Eine dämpfende Ausgestaltung der Gehäuse-Innenwandung verhindert jede Beschädigung des Gewichtsstücks zuverlässig.

Auch die Lagerung zwischen einzeln Kalibriervorgängen oder der Transport zu zertifizierten Prüfstellen ist bei einer erfindungsgemäßen Ausgestaltung des Kalibriergewichts unproblematisch: Wird der offene Boden des Gehäuses mit einem separaten Gehäuseverschluss verschlossen, kann das Eindringen von Verschmutzungen zuverlässig unterbunden werden.

Das Gewichtsstück ist ausgebildet als ein rotationssymmetrisches Knopfgewicht, mit einem Kopf eines ersten Durchmessers, einem zylindrischen Körper eines zweiten Durchmessers und einem zwischen dem Kopf und dem Körper angeordneten Hals eines dritten Durchmessers, der kleiner als der erste Durchmesser und typischerweise auch kleiner als zweite Durchmesser ist. Bevorzugt handelt es sich um ein Knopfgewicht der oben bereits genannten Industrienorm. Der Innenraum des Gehäuses ist an eine derartige Ausgestaltung des Gewichtsstücks angepasst. Mit anderen Worten ist erfindungsgemäß vorgesehen, dass der Innenraum des Gehäuses in wenigstens zwei Axialabschnitte unterteilt ist, nämlich
- einen den Kopf des Gewichtsstücks mit radialem und axialem Übermaß umgebenden Kopfbereich und
- einen den Körper des Gewichtsstücks mit radialem Über- und axialem Untermaß umgebenden Körperbereich,
die durch einen nach innen kragenden Halssteg axial voneinander abgegrenzt sind, welcher den Übergang zwischen dem Kopfbereich und dem Körperbereich auf einen Durchmesser kleiner als der erste und größer als der dritte Durchmesser verengt.

Bei lagerichtiger Positionierung ragt also der Halssteg in die Verengung zwischen dem Kopf und dem Körper des Gewichtsstücks hinein, wobei jedoch ein radialer Abstand zu dem Minimaldurchmesser des Halses, d. h. zum dritten Durchmesser, eingehalten wird. Ohne bodenseitige Abstützung des Gewichtsstücks hängt dieses also mit seinem Kopf an besagtem Halssteg. Beim Anheben des Gewichtsstücks relativ zum Gehäuse verliert der Kopf seinen mechanischen Kontakt zum Halssteg (in axialer Richtung), wobei aufgrund des Durchmesserunterschiedes zwischen Halssteg und drittem Durchmesser auch in radialer Richtung kein Kontakt zwischen dem Gewichtsstück und dem Gehäuse existiert.

Zur Erzeugung einer Zentrierwirkung ist bevorzugt vorgesehen, dass die kopfseitige Oberfläche des Halsstegs trichterförmig ausgebildet ist. Hierdurch wird sichergestellt, dass das Gewichtsstück im hängenden Zustand relativ zum Halssteg zentriert ist. Bei rein axialer Absenkung des Gehäuses relativ zu dem vom Lastaufnehmer der Waage unterstützten Gewichtsstück ist dann sichergestellt, dass auch in radialer Richtung jeder Kontakt zwischen dem Hals des Gewichtsstücks und dem Halssteg des Gehäuses vermieden wird.

Zudem ist vorgesehen, dass das Gehäuse eine Axialführungsstruktur aufweist, die sich von seinem bodenseitigen Rand her in axialer Richtung erstreckt. Diese Führungsstruktur kann bei einer bevorzugten Ausführungsform der Erfindung als koaxiale, zylindrische Verjüngung der Gehäusewandung (innen und/oder außen) ausgebildet sein. Durch Wechselwirkung einer solchen Axialführungsstruktur mit korrespondierenden Axialführungsstrukturen der Waage kann sichergestellt werden, dass die beschriebene Absenkung des Gehäuses bei vom Lastaufnehmer der Waage unterstütztem Gewichtsstück in rein axialer Richtung erfolgt. Eine Relativverschiebung des Gehäuses zum abgestützten Gewichtsstück in radialer Richtung könnte zu einem unerwünschten Kontakt und damit zu einem Massennebenschluss zwischen dem Hals des Gewichtsstücks und dem Halssteg des Gehäuses führen. Eine solche Relativbewegung in radialer Richtung wird durch die genannte Axialführungsstruktur zuverlässig unterbunden. Durch diese radiale Relativfixierung von Gewichtsstück und Waage, insbesondere Lastaufnehmer, wird zugleich eine exakt reproduzierbare Positionierung des Gewichtsstücks auf dem Lastaufnehmer erreicht. Diese ist vorzugsweise zentriert, sodass sog. Ecklasteffekte, d. h. Wägefehler durch außermittige Belastung des Lastaufnehmers, vermieden werden.

Vorteilhafterweise ist das Gehäuse aus mehreren Gehäuse-Teilschalen zusammengesetzt, die untrennbar miteinander verbunden sind. Besonders bevorzugt sind genau zwei symmetrisch aufgebaute Halbschalen vorgesehen. Beim Zusammenbau eines erfindungsgemäßen Kalibriergewichts kann das Gewichtsstück in die eine Halbschale eingelegt und das Gehäuse sodann durch Aufsetzen und verbinden der zweiten Halbschale komplettiert werden. Die Teilschalen können bspw. miteinander verschweißt, verklebt oder verrastet werden. In jedem Fall sollte die Verbindung in dem Sinne untrennbar sein, dass ein Öffnen des Gehäuses nicht ohne nachhaltige Beschädigung wenigstens einer der Teilschalen möglich ist. Auf diese Weise wird sichergestellt, dass das Gewichtsstück nur von autorisierten Stellen bei entsprechenden Überprüfungsvorgängen aus dem Gehäuse entnommen und im Anschluss in ein neues Gehäuse eingebracht werden kann.

Die Nur-einmal-Verwendbarkeit jedes Gehäuses hat eine eindeutige Zuordnung zwischen Gewichtsstück und Gehäuse zur Folge. Dies erlaubt es, gewichtsstückbezogene Kalibrierdaten auf einem lediglich mit dem Gehäuse verbundenen Informationsträger zu hinterlegen. Ein solcher Informationsträger kann bspw. als Barcode, QR-Code, elektrisch auslesbarer Transponder oder auf ähnliche Weise ausgestaltet sein.

Zur besonders einfachen Handhabbarkeit erfindungsgemäßer Kalibriergewichte ist bei einer bevorzugten Weiterbildung der Erfindung als Ergänzung ein Kalibrieradapter vorgesehen, der ortsfest mit einer Waage verbunden oder mit ihr verbindbar ist und eine an die Axialführungsstruktur eines erfindungsgemäßen Kalibriergewichts angepasste, korrespondierende Axialführungsstruktur aufweist. Ein solcher Kalibrieradapter zeichnet sich insbesondere dadurch aus, dass das Kalibriergewicht durch formschlüssige Interaktion zwischen seiner Axialführungsstruktur und der korrespondierenden Axialführungsstruktur des mit der Waage verbundenen Kalibrieradapters zwischen einer Vorkalibrierstellung und einer Kalibrierstellung ausschließlich axial bewegbar ist, wobei in der Vorkalibrierstellung das Gewichtsstück ohne Kontakt zu einem Lastaufnehmer der Waage an seinem Gehäuse hängt und in der Kalibrierstellung ohne Kontakt zu seinem Gehäuse auf dem Lastaufnehmer aufsteht. Ein solcher Kalibrieradapter kann fest, mit der Waage verbunden sein; hierunter sei auch eine einstückige Verbindung mit der Waagenbasis oder einem Teil davon verstanden. Es ist jedoch auch möglich, einen solchen Kalibrieradapter als separates Bauteil auszubilden, welches bedarfsweise, d. h. vor Durchführung eines Kalibriervorgangs, in geeigneter Weise an der Waage, insbesondere an ihrer festen Waagenbasis, fixiert, beispielsweise angeschraubt oder festgesteckt, wird.

Bevorzugte Ausführungsformen sind Gegenstand der abhängigen Ansprüche.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Schnittdarstellung einer ersten Ausführungsform eines erfindungsgemäßen Kalibriergewichts,
- Figur 2:: das Kalibriergewicht von Figur 1 in zwei unterschiedlichen Positionen,
- Figur 3:: ein zweite Ausführungsform eines erfindungsgemäßen Kalibriergewichts,
- Figur 4:: drei Phasen eines Kalibriervorgangs unter Verwendung des Kalibriergewichts von Figur 3.

### Beschreibung bevorzugter Ausführungsformen

Gleiche Bezugszeichen in den Figuren deuten auf gleiche oder analoge Elemente hin.

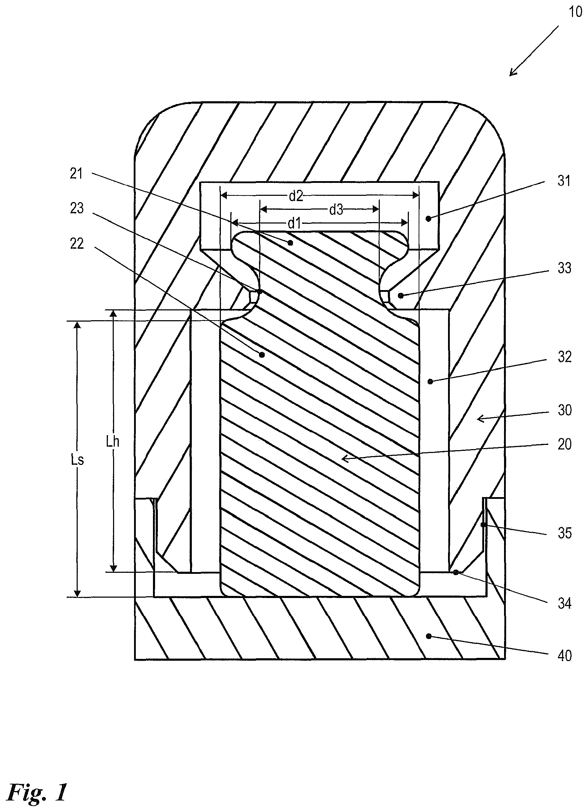

Figur 1 zeigt ein erfindungsgemäßes Kalibriergewicht 10 in einer ersten Ausführungsform. Das Kalibriergewicht 10 umfasst ein Gewichtsstück 20 sowie ein Gehäuse 30. Das Gewichtstück 20 ist als Standard-Knopfgewicht gemäß OIML R 111-1:2004/DIN 8127:2007-11 ausgebildet. Es ist rotationssymmetrisch ausgestaltet und weist in seinem oberen Bereich einen Kopf 21 des ersten Durchmessers d1 auf. In seinem unteren Bereich weist es einen im Wesentlichen zylindrischen Körper 22 mit einem weiten Durchmesser d2 auf. Zwischen dem Kopf 21 und dem Körper 22 ist ein Hals 23 angeordnet, der als eine halbtoroide Ringnut mit einem minimalen dritten Durchmesser d3 ausgestaltet ist.

Das Gewichtsstück 20 ist in dem Gehäuse 30 eingeschlossen. Das Gehäuse 30 weist einen grundsätzlich offenen Gehäuseboden 34 auf, der bei der gezeigten Konfiguration durch einen separaten Gehäuseverschluss 40 verschlossen ist. Im Gegensatz zu dem grundsätzlich offenen Charakter des Gehäusebodens 34 ist der Gehäuseverschluss 40 nicht erfindungswesentlich.

Der Innenraum des Gehäuses 30 ist bei der gezeigten Ausführungsform in zwei Axialbereiche unterteilt, nämlich einen Kopfbereich 31 und einen Körperbereich 32. Der Kopfbereich 31 umgibt den Kopf 21 des Gewichtsstücks 20 mit radialem und axialem Übermaß. Mit anderen Worten ist die axiale Länge des Kopfbereichs 31 des Gehäuses 30 größer als die axiale Länge des Kopfes 21 des Gewichtsstücks 20. Außerdem ist der Durchmesser des Kopfbereichs 31 des Gehäuses 30 größer als der erste Durchmesser d1 des Kopfes 21 des Gewichtsstücks 20. Der Körperbereich 32 des Gehäuses 30 umgibt den Körper 22 des Gewichtsstücks 20 mit radialem Übermaß und vorzugsweise axialem Untermaß. Mit anderen Worten ist der Durchmesser des Körperbereichs 32 des Gehäuses 30 größer als der zweite Durchmesser d2 des Körpers 22 des Gewichtsstücks 20, während seine axiale Länge Lh bevorzugt kleiner ist als die axiale Länge Ls des Körpers 22 des Gewichtsstücks 20. Das Gewichtsstück 20 ragt also bevorzugt in axialer Richtung, insbesondere nach unten, über den Körperbereich 32 des Gehäuses 30 hinaus. Denkbar ist auch eine umgekehrte axiale Relativdimensionierung, bei der der Körperbereichs 32 des Gehäuses 30 den Körper 22 des Gewichtsstücks 20 axial überragt. Zur Erreichung der oben erläuterten Effekte muss dann natürlich die Form des Lastaufnehmers der Waage entsprechend angepasst werden, sodass dieser kontaktfrei in den Körperbereich 32 des Gehäuses 30 hineinragen kann.

Zwischen dem Kopfbereich 31 und dem Körperbereich 32 des Gehäuses 30 ist ein Halssteg 33 angeordnet, der den Durchlass zwischen den genannten Gehäusebereichen auf einen Durchmesser verengt, der zwar größer ist als der dritte Durchmesser d3 des Halses 23 des Gewichtsstück 20, jedoch kleiner ist als der erste Durchmesser d1 des Kopfes 21 des Gewichtsstücks 20.

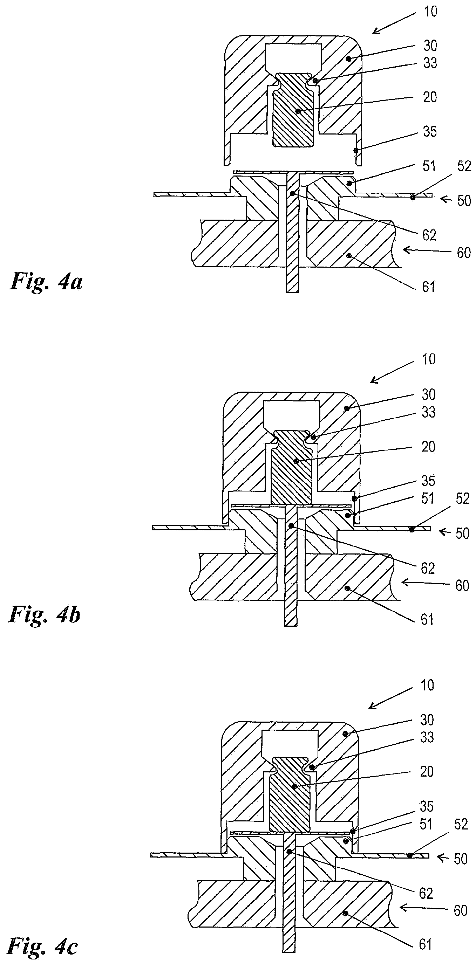

An ihrem bodenseitigen Rand ist die Wandung des Gehäuses 30 außen konzentrisch zylindrisch verjüngt. Es resultiert eine Axialführungsstruktur 35, die, wie in Figur 1 gezeigt, zur Halterung des Gehäuseverschlusses 40 genutzt werden kann. Ihre primäre Funktion, nämlich eine Axialführung des Gehäuses 30 gegenüber einer in Figur 1 nicht dargestellten Waage, wird weiter unten im Zusammenhang mit Figur 4 noch näher diskutiert.

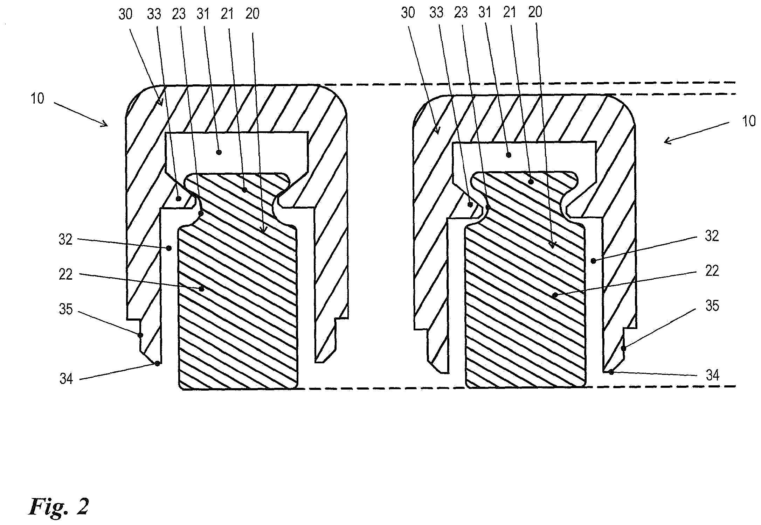

Die Konsequenzen aus diesen geometrischen Zusammenhängen sind in Figur 2 verdeutlicht, die das Kalibriergewicht 10 von Figur 1 ohne dessen Gehäuseverschluss 40 in zwei unterschiedlichen Stellungen darstellt. Links in Figur 2 hängt das Gewichtsstück 20, der Schwerkraft folgend, mit der Unterseite seines Kopfes 21 auf der Oberseite des Halsstegs 33. Die Oberseite des Halsstegs 33 ist bei der gezeigten Ausführungsform trichterartig gestaltet, sodass das Gewichtsstück 20 zentriert im Gehäuse 30 hängt. Beim Absenken des Gehäuses 30 bei gleichzeitiger Unterstützung des Gewichtsstücks 20 entgegen der Schwerkraft bzw. beim Anheben des Gewichtsstücks 20 gegenüber dem festgehaltenen Gehäuse 30 löst sich, wie in der rechten Teilfigur von Figur 2 gezeigt, das Gewichtsstück 20 vom Halssteg 33, sodass es berührungslos zentriert innerhalb des Gehäuses 30 positioniert ist.

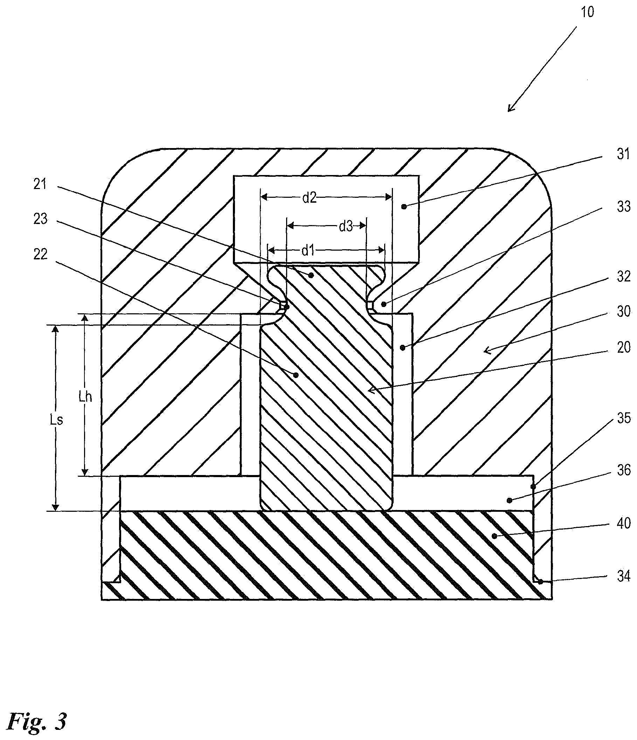

Figur 3 zeigt eine alternative Ausführungsform eines erfindungsgemäßen Kalibriergewichts 10, welches sich von der Ausführungsform gemäß Figur 1 im Wesentlichen durch die Ausgestaltung der Axialführungsstruktur 35 unterscheidet. Während die Wandungsverjüngung bei der Ausführungsform von Figur 1 durch eine Materialeinsparung der Gehäuseaußenwand realisiert ist, ist die Wandungsverjüngung bei der Ausführungsform von Figur 3 durch eine Materialeinsparung an der Gehäuseinnenwand realisiert. Diese Variante ließe sich alternativ auch so beschreiben, dass sich an den Körperbereich 32 des Gehäuses 30 unten ein weiterer Axialabschnitt, der als Fußbereich 36 mit erweitertem Innendurchmesser bezeichnet werden kann, anschließt.

Figur 4 zeigt drei Phasen des Aufsetzens eines erfindungsgemäßen Kalibriergewichts 10 gemäß der Ausführungsform von Figur 3 auf einen Kalibrieradapter 50 einer Waage 60. Die Waage 60, die nur fragmentarisch dargestellt ist, umfasst eine feste Basis 61, der gegenüber ein Lastaufnehmer 62, insbesondere in Form einer Waagschale, axial beweglich gelagert ist. Der Lastaufnehmer 62 ist über einen nicht dargestellten, auch als Wägesystem bezeichneten Hebelmechanismus mit einer Sensorik, beispielsweise einer elektromagnetischen Kompensations- oder einer Dehnmessstreifen-Anordnung, wie sie dem Fachmann im Kontext von Präzisionswaagen bekannt sind, verbunden.

Der Kalibrieradapter 50 ist mit der festen Basis 61 verbunden, z. B. aufgeschraubt und wird von dem Lastaufnehmer 62 axial durchsetzt. Der Kalibrieradapter 50 weist einen Sockel 51 auf, dessen Außendurchmesser dem Innendurchmesser der Axialführungsstruktur 35 des Gehäuses 30 des Kalibriergewichts 10 entspricht. Der Sockel 51 ist von einem Tragflansch 52 umgeben.

In der ersten Phase des Aufsetzvorgangs, die in Figur 4a dargestellt ist, wird das unverschlossene Kalibriergewicht 10 im Wesentlichen koaxial über dem Kalibrieradapter 50 gehalten. Das Gewichtsstück 20 hängt mit seinem Kopf 21 zentriert am Halssteg 33 des Gehäuses 30.

In der in Figur 4b gezeigten, zweiten Phase des Aufsetzvorgangs, werden die Axialführungsstruktur 35 des Gehäuses 30 und der Sockel 51 miteinander in Eingriff gebracht, sodass, abgesehen von einer Rotationsbewegung lediglich eine axiale Relativbewegung von Gehäuse 30 und Sockel 51 möglich bleibt. Insbesondere wird eine radiale Relativbewegung unterbunden. In Figur 4b ist exakt derjenige Moment dargestellt, in dem der Boden des Gewichtsstücks 21 auf dem Lastaufnehmer 62 aufsetzt, wobei sich jedoch der Kopf 21 noch nicht vom Halssteg 33 löst. Die nicht dargestellte, geringfügig weniger abgesenkte Position, zu der noch keine Berührung zwischen dem Gewichtsstück 20 und dem Lastaufnehmer 62 gegeben ist, wurde zuvor als Vorkalibrierungsstellung angesprochen.

Ein weiteres axial geführtes Absenken des Gehäuses 30 bei von dem Lastaufnehmer 62 unterstütztem Gewichtsstück 20 führt zu einer axialen Relativbewegung zwischen Gehäuse 30 und Gewichtsstück 20, sodass es zu der in Figur 2 in größerer Deutlichkeit gezeigten Loslösung des Gewichtsstücks 20 vom Gehäuse 30 kommt. Die zentrierte, d. h. koaxiale Ausrichtung zwischen dem Gewichtsstück 20 und dem Gehäuse 30 bleibt dabei erhalten, da, wie oben erläutert, jede radiale Relativbewegung durch die Wechselwirkung zwischen der Axialführungsstruktur 35 und dem Sockel 51 unterbunden wird. Das Absenken des Gehäuses 30 wird durch Aufsetzen des unteren Gehäuserandes auf dem Tragflansch 52 gestoppt. Bei der Dimensionierung ist selbstverständlich darauf zu achten, dass in dieser Position die Unterseite des Halsstegs 33 nicht die Schultern des Körpers 22 des Gewichtsstücks 20 kontaktiert.

Das Gewichtsstück 20 liegt in dieser zuvor als Kalibrierungsstellung angesprochenen Position vollständig auf dem Lastaufnehmer 62 auf. Jeder Massennebenschluss mit dem Gehäuse ist aufgrund der Berührungslosigkeit ausgeschlossen. Zugleich wirkt das Gehäuse 30 als Windschutz bei einer nachfolgenden Präzisionswägung des Gewichtsstücks 20.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann der Kalibrieradapter, mittels dessen die Waage und das erfindungsgemäße Kalibriergewicht so koppelbar sind, dass axiale, nicht aber radiale Relativbewegungen zugelassen werden, als mit der Waage, insbesondere ihrer Waagenbasis oder einem Teil davon, reversibel verbindbares, separates Bauteil oder als ein fester Bestandteil der Waage, insbesondere ihrer Waagenbasis oder einem Teil davon, ausgebildet sein.

### Bezugszeichenliste

- 10: Kalibriergewicht
- 20: Gewichtsstück
- 21: Kopf von 20
- 22: Körper von 20
- 23: Hals von 20
- 30: Gehäuse
- 31: Kopfbereich von 30
- 32: Köperbereich von 30
- 33: Halssteg
- 34: Gehäuseboden
- 35: Axialführungsstruktur
- 36: Fußbereich von 30
- 40: Gehäuseverschluss
- 50: Kalibrieradapter
- 51: Sockel von 50
- 52: Tragflansch von 50
- 60: Waage
- 61: feste Basis von 60
- 62: Lastaufnehmer von 60
- d1: erster Durchmesser
- d2: zweiter Durchmesser
- d3: dritter Durchmesser
- Ls: axiale Länge von 20
- Lh: axiale Länge von 32

## Patentansprüche

1. Kalibriergewicht (10), umfassend ein Gewichtsstück (20) und ein Gehäuse (30), wobei das Gewichtsstück (20) in einem bodenseitig offenen Gehäuse (30) unverlierbar und mit Axialspiel angeordnet ist, wobei
das Gewichtsstück (20) bei vertikaler Ausrichtung des Kalibriergewichts an Aufhängungsstrukturen innerhalb des Gehäuses aufgehängt ist,
**dadurch gekennzeichnet,**
**dass** das Gewichtsstück (20) ausgebildet ist als ein rotationssymmetrisches Knopfgewicht mit einem Kopf (21) eines ersten Durchmessers (d1), einem zylindrischen Körper (22) eines zweiten Durchmessers (d2) und einem zwischen dem Kopf (21) und dem Körper (22) angeordneten Hals (23) eines dritten Durchmessers (d3), der kleiner als der erste Durchmesser (d1) ist, und dass der Innenraum des Gehäuses (30) in wenigstens zwei Axialabschnitte unterteilt ist, nämlich
- einen den Kopf (21) des Gewichtsstücks (20) mit radialem und axialem Übermaß umgebenden Kopfbereich (31) und
- einen den Körper (22) des Gewichtsstücks (20) mit radialem Übermaß umgebenden Körperbereich (32),
die durch einen nach radial innen kragenden Halssteg (33) axial voneinander abgegrenzt sind, welcher den Übergang zwischen dem Kopfbereich (31) und dem Körperbereich (32) auf einen Durchmesser kleiner als der erste (d1) und größer als der dritte Durchmesser (d3) verengt, wobei der Halssteg (33) den Aufhängungsstrukturen entspricht und wobei das Gehäuse (30) eine Axialführungsstruktur (35) aufweist, die sich von seinem bodenseitigen Rand her in axialer Richtung erstreckt.

2. Kalibriergewicht (10) nach Anspruch 1,
**dadurch gekennzeichnet,**
**dass** der Körperbereich (32) den Körper (22) des Gewichtsstücks (20) mit axialem Untermaß umgibt.

3. Kalibriergewicht (10) nach einem der vorangehenden Ansprüche,
**dadurch gekennzeichnet,**
**dass** die kopfseitige Oberfläche des Halsstegs (33) trichterförmig ausgebildet ist.

4. Kalibriergewicht (10) nach einem der vorangehenden Ansprüche,
**dadurch gekennzeichnet,**
**dass** die Axialführungsstruktur (35) als koaxiale, zylinderische Verjüngung der Gehäusewandung ausgebildet sind.

5. Kalibriergewicht (10) nach einem der vorangehenden Ansprüche,
**dadurch gekennzeichnet,**
**dass** das Gehäuse aus mehreren Gehäuse-Teilschalen zusammengesetzt ist, die untrennbar miteinander verbunden sind.

6. Kalibriergewicht (10) nach einem der vorangehenden Ansprüche,
**dadurch gekennzeichnet,**
**dass** das Gehäuse (30) einen fest mit ihm verbundenen Informationsträger aufweist, auf dem das Gewichtsstück (20) betreffende Kalibrierdaten hinterlegt sind.

7. Verwendung eines mit einer Waage (60) verbundenen oder verbindbaren Bauteils, welches eine an die Axialführungsstruktur (35) des Gehäuses eines Kalibriergewichts (10) nach einem der vorangehenden Ansprüche angepasste, korrespondierende Axialführungsstruktur, nämlich
- einen Sockel (51), dessen Außendurchmesser dem Innendurchmesser der Axialführungsstruktur (35) des Gehäuses (30) eines Kalibriergewichts (10) entspricht, sowie
- einen den Sockel (51) umgebenden Tragflansch (52), aufweist, **als** Kalibrieradapter (50), mittels dessen das Kalibriergewicht (10) durch mechanische Interaktion zwischen seiner Axialführungsstruktur (35) und der korrespondierenden Axialführungsstruktur des derart, dass er von einem Lastaufnehmer (62) der Waage (60) axial durchsetzt wird, ortsfest mit der festen Basis (61) der Waage (60) verbundenen Kalibrieradapters (50) zwischen einer Vorkalibrierstellung und einer Kalibrierstellung ausschließlich axial bewegbar ist, wobei in der Vorkalibrierstellung das Gewichtsstück (20) ohne Kontakt zu einem Lastaufnehmer (62) der Waage (60) an seinem Gehäuse (30) hängt und in der Kalibrierstellung ohne Kontakt zu seinem Gehäuse (30) auf dem Lastaufnehmer (62) aufsteht.

## Claims

1. Calibration weight (10), comprising a weight piece (20) and a housing (30), wherein the weight piece (20) is arranged captively and with axial play in a housing (30) which is open at the bottom, wherein
the weight piece (20), when the calibration weight is oriented vertically, is suspended on suspension structures within the housing,
**characterized in**
**that** the weight piece (20) is designed as a rotationally symmetrical knob weight having a head (21) with a first diameter (d1), a cylindrical body (22) with a second diameter (d2), and a neck (23), arranged between the head (21) and the body (22), with a third diameter (d3) which is smaller than the first diameter (d1), and that the interior of the housing (30) is divided into at least two axial portions, namely
- a head region (31) surrounding the head (21) of the weight piece (20) with a radial and axial oversize, and
- a body region (32) surrounding the body (22) of the weight piece (20) with a radial oversize,
which are axially delimited from each other by a radially inwardly protruding neck web (33) which narrows the transition between the head region (31) and the body region (32) to a diameter smaller than the first diameter (d1) and larger than the third diameter (d3), wherein the neck web (33) corresponds to the suspension structures, and wherein the housing (30) has an axial guide structure (35) which extends in the axial direction from its bottom edge.

2. Calibration weight (10) according to claim 1,
**characterized in**
**that** the body region (32) surrounds the body (22) of the weight piece (20) with an axial undersize.

3. Calibration weight (10) according to any one of the preceding claims,
**characterized in**
**that** the head-side surface of the neck web (33) is funnel-shaped.

4. Calibration weight (10) according to any one of the preceding claims,
**characterized in**
**that** the axial guide structure (35) is designed as a coaxial, cylindrical tapering of the housing wall.

5. Calibration weight (10) according to any one of the preceding claims,
**characterized in**
**that** the housing is composed of a plurality of housing shell elements which are inseparably connected to each other.

6. Calibration weight (10) according to any one of the preceding claims,
**characterized in**
**that** the housing (30) has an information carrier fixedly connected thereto, on which calibration data relating to the weight piece (20) are stored.

7. Use of a component which is or can be connected to a scale (60) and which has a corresponding axial guide structure adapted to the axial guide structure (35) of the housing of a calibration weight (10) according to any one of the preceding claims, namely
- a pedestal (51), the external diameter of which corresponds to the internal diameter of the axial guide structure (35) of the housing (30) of a calibration weight (10), as well as
- a support flange (52) surrounding the pedestal (51)
as a calibration adapter (50), by means of which the calibration weight (10) is movable exclusively in the axial direction between a pre-calibration position and a calibration position by mechanical interaction between its axial guide structure (35) and the corresponding axial guide structure of the calibration adapter (50), which is connected to the fixed base (61) of the scale (60) in a stationary manner such that a load receptor (62) of the scale (60) passes through it, wherein the weight piece (20) in the pre-calibration position is suspended on its housing (30) and does not make contact with a load receptor (62) of the scale (60) and in the calibration position stands on the load receptor (62) and does not make contact with the housing (30).

## Revendications

1. Poids d'étalonnage (10), comprenant une pièce formant poids (20) et un boîtier (30), dans lequel la pièce formant poids (20) est disposée dans un boîtier (30) ouvert côté fond de manière imperdable et avec du jeu, dans lequel
la pièce formant poids (20) lors d'une orientation verticale du poids d'étalonnage est suspendue à des structures de suspension à l'intérieur du boîtier,
**caractérisé en ce**
**que** la pièce formant poids (20) est réalisée sous la forme d'un poids bouton à symétrie de rotation avec une tête (21) d'un premier diamètre (d1), un corps cylindrique (22) d'un deuxième diamètre (d2) et un col (23) d'un troisième diamètre (d3) disposé entre la tête (21) et le corps (22), qui est inférieur au premier diamètre (d1), et que l'espace intérieur du boîtier (30) est divisé en au moins deux parties axiales, à savoir
- une zone de tête (31) entourant la tête (21) de la pièce formant poids (20) avec un surdimensionnement radial et axial et
- une zone de corps (32) entourant le corps (22) de la pièce formant poids (20) avec un surdimensionnement radial,
qui sont séparées axialement l'une de l'autre par une nervure de col (33) faisant saillie radialement vers l'intérieur, laquelle rétrécit la transition entre la zone de tête (31) et la zone de corps (32) à un diamètre inférieur au premier (d1) et supérieur au troisième diamètre (d3), dans lequel la nervure de col (33) correspond aux structures de suspension et dans lequel le boîtier (30) présente une structure de guidage axial (35), qui s'étend à partir de son bord côté fond dans la direction axiale.

2. Poids d'étalonnage (10) selon la revendication 1,
**caractérisé en ce**
**que** la zone de corps (32) entoure le corps (22) de la pièce formant poids (20) avec un sous-dimensionnement axial.

3. Poids d'étalonnage (10) selon l'une quelconque des revendications précédentes,
**caractérisé en ce**
**que** la surface côté tête de la nervure de col (33) est réalisée en forme d'entonnoir.

4. Poids d'étalonnage (10) selon l'une quelconque des revendications précédentes,
**caractérisé en ce**
**que** la structure de guidage axial (35) est réalisée sous la forme d'un amincissement coaxial, cylindrique de la paroi de boîtier.

5. Poids d'étalonnage (10) selon l'une quelconque des revendications précédentes,
**caractérisé en ce**
**que** le boîtier est composé de plusieurs coques partielles de boîtier, qui sont reliées les unes aux autres de manière inséparable.

6. Poids d'étalonnage (10) selon l'une quelconque des revendications précédentes,
**caractérisé en ce**
**que** le boîtier (30) présente un support d'informations relié solidement à celui-ci, sur lequel des données d'étalonnage concernant la pièce formant poids (20) sont mises en mémoire.

7. Utilisation d'un composant relié ou pouvant être relié à une balance (60), lequel présente une structure de guidage axial correspondante, adaptée à la structure de guidage axial (35) du boîtier d'un poids d'étalonnage (10) selon l'une quelconque des revendications précédentes, à savoir
- un socle (51), dont le diamètre extérieur correspond au diamètre intérieur de la structure de guidage axial (35) du boîtier (30) d'un poids d'étalonnage (10), ainsi que
- une bride porteuse (52) entourant le socle (51)
en tant qu'adaptateur d'étalonnage (50), au moyen duquel le poids d'étalonnage (10) peut être déplacé exclusivement axialement par interaction mécanique entre sa structure de guidage axial (35) et la structure de guidage axial correspondante de l'adaptateur d'étalonnage (50) relié à demeure à la base fixe (61) de la balance (60) entre une position de pré-étalonnage et une position d'étalonnage, de telle sorte qu'il est traversé axialement par un récepteur de charge (62) de la balance (60), dans laquelle dans la position de pré-étalonnage la pièce formant poids (20) est suspendue sans contact par rapport à un récepteur de charge (62) de la balance (60) à son boîtier (30) et dans la position d'étalonnage est posée sans contact par rapport à son boîtier (30) sur le récepteur de charge (62).
